# EUROPEAN PATENT APPLICATION

(11) **EP 3 435 627 A1**
(43) Date of publication of application: **30.01.2019**
(21) Application number: 17769461.9
(22) Date of filing: 23.03.2017
(51) Int. Cl.: H04L 29/08

(54) **METHOD OF CONTROLLING SERVICE TRAFFIC BETWEEN DATA CENTERS, DEVICE, AND SYSTEM**

(30) Priority: 25.03.2016 CN 201610177065
(71) Applicant: Alibaba Group Holding Limited, Grand Cayman (KY)
(72) Inventor: CHEN, Ziang, Hangzhou Zhejiang 311121 (CN); WU, Jiaming, Hangzhou Zhejiang 311121 (CN); WU, Hao, Hangzhou Zhejiang 311121 (CN); CHEN, Zhuo, Hangzhou Zhejiang 311121 (CN); WANG, Qian, Hangzhou Zhejiang 311121 (CN); LEI, Haisheng, Hangzhou Zhejiang 311121 (CN); DONG, Guangtao, Hangzhou Zhejiang 311121 (CN); LIU, Wangwang, Hangzhou Zhejiang 311121 (CN); LI, Pengfei, Hangzhou Zhejiang 311121 (CN)
(74) Representative: Finnegan Europe LLP
(86) International application number: PCT/CN2017/077807
(87) International publication number: WO 2017/162184

(57) **Abstract**

The present invention discloses a method, an apparatus, and a system for controlling service traffic between data centers. The method includes: providing an active data center and a standby data center that have a mutually redundant relationship, at least one load balancing device being respectively deployed in the active data center and the standby data center, wherein in the case of switching from the active data center to the standby data center, service traffic transmitted to the active data center is guided to the standby data center, and the load balancing device in the standby data center allocates the service traffic. The present invention solves the technical problem in the prior art thatan Internet service in an Internet data center (IDC) isinterrupted when a data center fails and becomes unavailable.

## Description

The present application claims priority to Chinese Patent Application No. 201610177065.2, filed on March 25, 2016 and entitled "METHOD, APPARATUS, AND SYSTEM FOR CONTROLLING SERVICE TRAFFIC BETWEEN DATA CENTERS," which is incorporated herein by reference in its entirety.

### Technical Field

The present invention relates to the field of load balancing technologies, and in particular, to a method, an apparatus, and a system for controlling service traffic between data centers.

### Background Art

At present, computer technologies have entered the network-centered era. The high-speed development of the Internet and the rapid increase in the quantity of users and the amount of network traffic impose heavy burden to an increasingly large quantity of servers. As a result, network servers need to have higher expandability and availability. An Internet data center (IDC) has emerged to solve this problem.

The IDC is network based and is a part of basic network resources of the Internet. The IDC provides a high-end data transmission service and a high-speed access service, and provides both fast and secure networks and services of network management solutions such as server supervision and traffic monitoring.

An Internet service cluster in the IDC has implemented various redundancies for power, networks, servers, and the like. A single cluster can prevent a failure from affecting an external service for a user. The failure may be "a single-path power failure," "a one-sided network failure", "a service hardware failure", "an unexpected system breakdown", or even "a sudden power failure, a sudden network interruption or a sudden breakdown of anentire (one) cabinet". However, a failure in a larger range, e.g., a failure that an entire data center becomes unavailable, cannot be solved by using internal redundancies for Internet services in the IDC.

No effective solution has been proposed at present to solve the technical problem in the prior art that an Internet service in an IDC is interrupted when a data center fails and becomes unavailable.

### Summary of the Invention

Embodiments of the present invention provide a method, an apparatus, and a system for controlling service traffic between data centers to at least solve the technical problem in the prior art that an Internet service in an IDC is interrupted when a data center fails and becomes unavailable.

In one aspect according to an embodiment of the present invention, a method for controlling service traffic between data centers is provided, including: providing an active data center and a standby data center that have a mutually redundant relationship, at least one load balancing device being respectively deployed in the active data center and the standby data center, wherein in the case of switching from the active data center to the standby data center, service traffic transmitted to the active data center is guided to the standby data center, and the load balancing device in the standby data center allocates the service traffic.

In another aspect according to an embodiment of the present invention, a system for controlling service traffic between data centers is further provided, including: an active data center, at least one load balancing device configured to receive and forward service traffic being deployed in the active data center; and a standby data center having a mutually redundant relationship with the active data center, at least one load balancing device being deployed in the standby data center, wherein in the case of switching from the active data center to the standby data center, service traffic is guided to the standby data center, and the load balancing device in the standby data center allocates the service traffic.

In another aspect according to an embodiment of the present invention, an apparatus for controlling service traffic between data centers is further provided, including: a control module configured to, in the case of switching from an active data center to a standby data center, guide service traffic transmitted to the active data center to the standby data center, such that a load balancing device in the standby data center allocates the service traffic, wherein the active data center and the standby data center have a mutually redundant relationship, and at least one load balancing device is respectively deployed in the active data center and the standby data center.

In the embodiments of the present invention, an active data center and a standby data center have a mutually redundant relationship, at least one load balancing device is respectively deployed in the active data center and the standby data center, in the case of switching from the active data center to the standby data center, service traffic transmitted to the active data center can be guided to the standby data center in the solution, such that the load balancing device in the standby data center allocates the service traffic, thus implementing migration of the service traffic.

It is easily noted that the active data center and the standby data center have a mutually redundant relationship, and data in the active data center can be synchronized to the standby data center in real time. When the active data center fails and becomes unavailable, switching can be performed from the active data center to the standby data center, such that the load balancing device in the standby data center allocates the traffic. Therefore, by means of the solution provided in the embodiments of the present application, once a catastrophic failure occurs in a data center (e.g., an active data center), service traffic can be quickly migrated to another data center (e.g., a standby data center), and service functions can be restored in the another data center within a short time, thus reducing corresponding waiting time of users, enhancing network data processing capability, and improving flexibility and availability of the network.

Accordingly, the solutions provided in the present invention solve the technical problem in the prior art that an Internet service in an IDC is interrupted when a data center fails and becomes unavailable.

### Brief Description of the Drawings

The accompanying drawings described herein are used to provide further understanding of the present invention, and constitute a part of the present application. Exemplary embodiments of the present invention and descriptions of the exemplary embodiments are used to explain the present invention, and are not intended to constitute inappropriate limitations to the present invention. In the accompanying drawings:
FIG. 1 is a block diagram of a hardware structure of a computer terminal in a method for controlling service traffic between data centers according to Embodiment 1 of the present application;
FIG. 2 is a flowchart of a method for controlling service traffic between data centers according to Embodiment 1 of the present application;
FIG. 3 is a schematic diagram of guidance of service traffic between data centers according to Embodiment 1 of the present application;
FIG. 4 is a schematic diagram of a deployment modeoflayer-4 load balancing according to Embodiment 1 of the present application;
FIG. 5 is a schematic diagram of a deployment modeoflayer-7 load balancing according to Embodiment 1 of the present application;
FIG. 6 is an interaction diagram of an optional method for controlling service traffic between data centers according to Embodiment 1 of the present application;
FIG. 7 is a schematic diagram of an apparatus for controlling service traffic between data centers according to Embodiment 2 of the present application;
FIG. 8 is a schematic diagram of an optional apparatus for controlling service traffic between data centers according to Embodiment 2 of the present application;
FIG. 9 is a schematic diagram of an optional apparatus for controlling service traffic between data centers according to Embodiment 2 of the present application;
FIG. 10 is a schematic diagram of an optional apparatus for controlling service traffic between data centers according to Embodiment 2 of the present application;
FIG. 11 is a schematic diagram of an optional apparatus for controlling service traffic between data centers according to Embodiment 2 of the present application;
FIG. 12 is a schematic diagram of a system for controlling service traffic between data centers according to Embodiment 3 of the present application;
FIG. 13 is a schematic diagram of an optional system for controlling service traffic between data centers according to Embodiment 3 of the present application;
FIG. 14 is a schematic diagram of an optional system for controlling service traffic between data centers according to Embodiment 3 of the present application;
FIG. 15 is a schematic diagram of an optional system for controlling service traffic between data centers according to Embodiment 3 of the present application;
FIG. 16 is a schematic diagram of an optional system for controlling service traffic between data centers according to Embodiment 3 of the present application; and
FIG. 17 is a structural block diagram of a computer terminal according to Embodiment 4 of the present application.

### Detailed Description

In order that those skilled in the art can better understand the solutions in the present invention, the technical solutions in the embodiments of the present invention will be described clearly and completely with reference to the accompanying drawings in the embodiments of the present invention. It is apparent that the described embodiments are merely a part of rather than all the embodiments of the present invention. Based on the embodiments of the present invention, all other embodiments derived by those of ordinary skill in the art without creative effort shall fall within the protection scope of the present invention.

It should be noted that, terms such as "first" and "second" in the specification, the claims, and the accompanying drawings of the present invention are used to distinguish between similar objects, and are not necessarily used to describe a specific sequence or order. It should be understood that data used in such a manner can be exchanged in appropriate cases, so that the embodiments of the present invention described herein can be implemented in sequences other than those shown or described herein. Moreover, terms "include" and "have" and any variations of the terms are intended to cover non-exclusive inclusion. For example, a process, method, system, product or device including a series of steps or units is not limited to those clearly listed steps or units, but can include other steps or units that are not clearly listed or are inherent to the process, method, product or device.

First, for some nouns or terms that appear in the process of describing the embodiments of the present application, the following explanations apply:
IDC: IDC is an abbreviation of "Internet data center," and is a standard professional telecommunications room environment established by a telecommunication sector using existing Internet communication links and bandwidth resources to provide comprehensive services in the aspects such as server hosting, server renting, and related value-added services for enterprises and governments.
SLB: SLB is an abbreviation of "Server Load Balancing." By setting a virtual service address (IP), resources of a plurality of cloud servers (Elastic Compute Service (ECS)) located in the same region are virtualized into a high-performance and highly-availability application service pool. Network requests from clients are then distributed to a cloud server pool according to an application-specific manner.
BGP: BGP is an abbreviation of "Border Gateway Protocol," and is used to exchange routing information between different autonomous systems (ASs). When two ASs need to exchange routing information, each AS must designate a node running the BGP to represent the AS to exchange routing information with the other AS.
Service migration: Service migration refers to migration of a service from one physical DC to another physical DC at a different place. All resources of the entire service are migrated during the migration.
URL: URL is an abbreviation of "Uniform Resource Locator." A URL is a concise way ofrepresenting a location of a resource that is available on the Internet and a method of accessing the resource, and is an address of a standard resource on the Internet.
LVS: LVS is open-source layer-4 load balancing software, and is load balancing software implemented in a LINUXplatform. An OSPF protocol is run between the LVS and an uplink switch. The uplink switch distributes a data stream to an LVS cluster through equal-cost multipath (ECMP)routing. The LVS cluster then forwards the data stream to a service server.

### Embodiment 1

According to the embodiments of the present application, an embodiment of a method for controlling service traffic between data centers is provided. It should be noted that, steps shown in the flowchart of the accompanying drawings can be performed in a computer system such as a group of computer executable instructions. Moreover, although a logic order is shown in the flowchart, in some cases, the shown or described steps can be performed in an order different from that described herein.

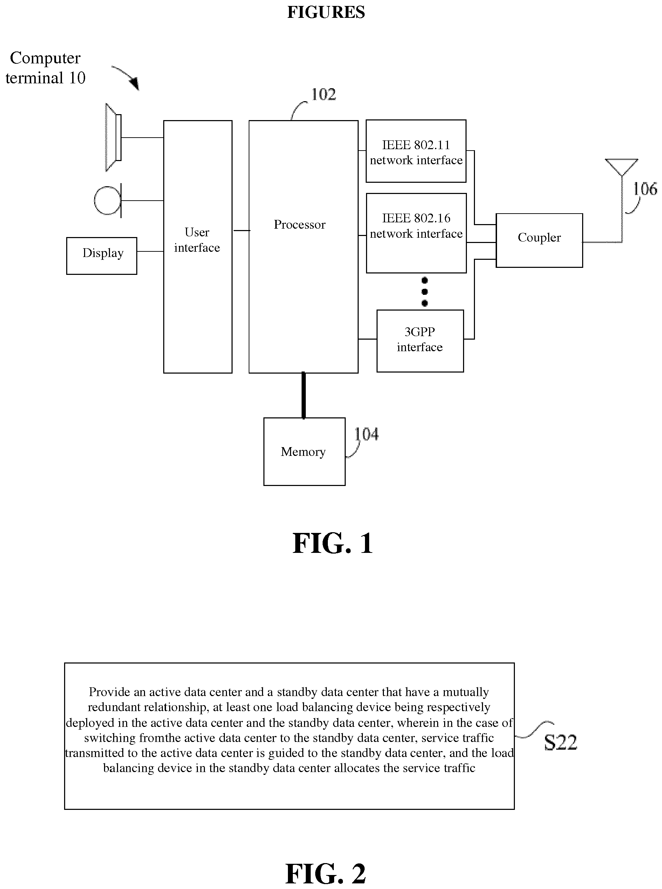

The method embodiment provided in Embodiment 1 of the present application can be performed in a mobile terminal, a computer terminal, or a similar arithmetic device. Running on a computer terminal is taken as an example. FIG. 1 is a block diagram of a hardware structure of a computer terminal in a method for controlling service traffic between data centers according to Embodiment 1 of the present application. As shown in FIG. 1, a computer terminal 10 can include one or more (merely one is shown in the figure) processors 102 (the processor 102 may include, but is not limited to, a processing apparatus, for example, a microprocessor such as an MCU or a programmable logic device such as an FPGA), a memory 104 configured to store data, and a transmission apparatus 106 having a communication function. Those of ordinary skill in the art can understand that the structure shown in FIG. 1 is merely schematic, and is not intended to limit the structure of the above electronic apparatus. For example, the computer terminal 10 may further include more or fewer components than those shown in FIG. 1 or have a configuration different from that shown in FIG. 1.

The memory 104 may be configured to store a software program and module of application software, e.g., a program instruction/module corresponding to the method for controlling service traffic between data centers in this embodiment of the present application. The processor 102 runs the software program and module stored in the memory 104 to perform various functional applications and data processing, i.e., implement the method for controlling service traffic between data centers. The memory 104 may include a high-speed random access memory, and may further include a non-volatile memory, e.g., one or more magnetic storage apparatuses, flash memories, or other non-volatile solid-state memories. In some examples, the memory 104 may further include memories remotely disposed with respect to the processor 102, and the remote memories may be connected to the computer terminal 10 through a network. The example of the network includes, but is not limited to, the Internet, an Intranet, a local area network, a mobile telecommunications network, and their combinations.

The transmission apparatus 106 is configured to receive or send data via a network. A specific example of the network may include a wireless network provided by a communications provider of the computer terminal 10. In an example, the transmission apparatus 106 includes a Network Interface Controller (NIC), which may be connected to another network device via a base station to communicate with the Internet. In an example, the transmission apparatus 106 may be a Radio Frequency (RF) module, which is configured to communicate with the Internet in a wireless manner.

In the above running environment, the present application provides a method for controlling service traffic between data centers shown in FIG. 2. FIG. 2 is a flowchart of a method for controlling service traffic between data centers according to Embodiment 1 of the present application. The method shown in FIG. 2 may include the following steps:
Step S22: An active data center and a standby data center that have a mutually redundant relationship are provided, at least one load balancing device being deployed respectively in the active data center and the standby data center, wherein in the case of switching from the active data center to the standby data center, service traffic transmitted to the active data center is guided to the standby data center, and the load balancing device in the standby data center allocates the service traffic.

Specifically, the active data center and the standby data center in the above step may be two data centers (IDC rooms) in the same region. A data center with a high priority in a data center cluster may be set as the active data center, and a data center with a low priority may be set as the standby data center. After switching is performed from the active data center to the standby data center, data in the active data center may be migrated to the standby data center. A storage device in the active data center communicates with a storage device in the standby data center, and data in the storage device in the active data center is synchronized to the storage device in the standby data center in real time. The standby data center creates a corresponding service network and a service server according to network information of a service server, network device configuration information, and service server information. Service traffic transmitted to the active data center is guided to the standby data center. Specifically, the load balancing device in the active data center may perform address and port conversion on service traffic sent by a user, and send the service traffic sent by the user to the load balancing device in the standby data center. The load balancing device may forward the service traffic to a target server according to a load balancing algorithm.

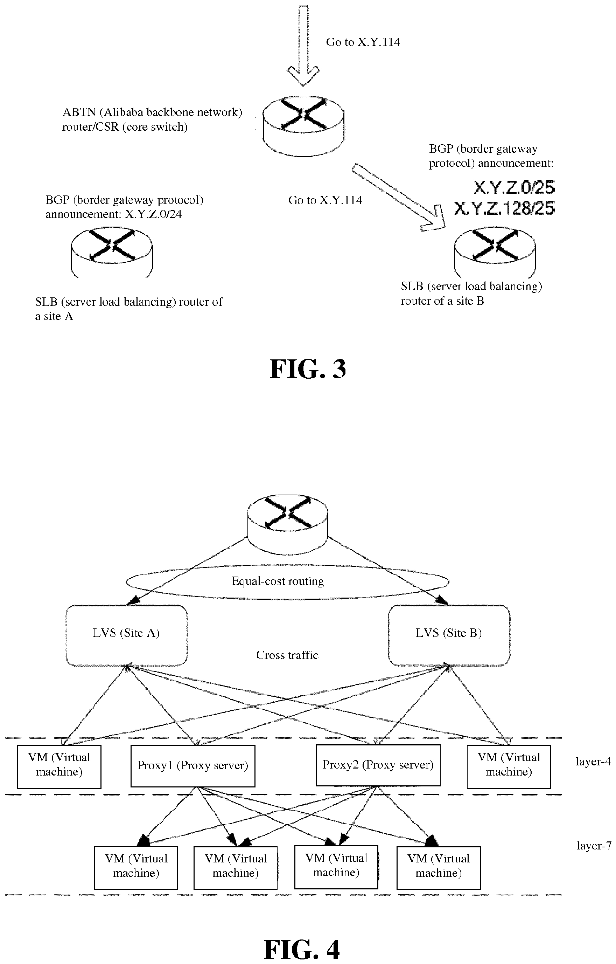

FIG. 3 is a schematic diagram of guidance of service traffic between data centers according to Embodiment 1 of the present application. For example, the foregoing embodiment of the present application is described in detail by taking an application scenario shown in FIG. 3 as an example. For an Internet service in an Aly IDC, an IP address of the Internet service in the IDC in the same region may be announced (published by BGP routing) simultaneously in two rooms with different "priorities". As shown in FIG. 3, a BGP route announcement of an SLB router of a site A is: X.Y.Z.0/24; and a BGP route announcement of an SLB router of a site B is: X.Y.Z.0/25, X.Y.Z. 128/25. A data center with a high priority is an active data center (which may be the SLB router of the site A in FIG. 3), and a data center with a low priority is a standby data center (which may be the SLB router of the site B in FIG. 3). A mutually redundant relationship is implemented between the active data center and the standby data center. In a normal case, 1/2 VIPs with high priorities run in two different IDCs. In the case of switching from the active data center to the standby data center, service traffic transmitted to the active data center can be guided to the standby data center. A load balancing device in the standby data center allocates the received service traffic to a corresponding service server by using a load balancing algorithm.

In the solution disclosed in Embodiment 1 of the present application, an active data center and a standby data center have a mutually redundant relationship, at least one load balancing device being respectively deployed in the active data center and the standby data center, wherein in the case of switching from the active data center to the standby data center, service traffic transmitted to the active data center can be guided to the standby data center in the solution, such that the load balancing device in the standby data center allocates the service traffic, thus implementing migration of the service traffic.

It is easily noted that the active data center and the standby data center have a mutually redundant relationship,and data in the active data center can be synchronized to the standby data center in real time. When the active data center fails and becomes unavailable, switching can be performed from the active data center to the standby data center, such that the load balancing device in the standby data center allocates the traffic. Therefore, by means of the solution provided in the embodiment of the present application, once a catastrophic failure occurs in a data center (e.g., an active data center), service traffic can be quickly migrated to another data center (e.g., a standby data center), and service functions can be restored in the another data center within a short time, thus reducing corresponding waiting time of users, enhancing network data processing capability, and improving flexibility and availability of the network.

Accordingly, the solution of the foregoing Embodiment 1 provided in the present application solves the technical problem in the prior art that an Internet service in an IDC is interrupted when a data center fails and becomes unavailable.

In the foregoing embodiment of the present application, the method may further include the following step: Step S24, the active data center is monitored by using an intermediate router, and if it is detected that the active data center is in an unavailable state, switchingis performed from the active data center to the standby data center.

Specifically, the unavailable stateat least includes any one of the following states: a power-off state, a failed state, an intrusion state, and an overflow state.

In an optional solution, when detecting that the active data center is unavailable, the intermediate router may deliver a data center switching instruction. The active data center may lower its own priority after the storage device in the active data center receives the data center switching instruction, and the standby data center may raise its own priority after the storage device in the standby data center receives the data center switching instruction, such that switching is performed from the active data center to the standby data center.

For example, the foregoing embodiment of the present application is described in detail by still taking the application scenario shown in FIG. 3 as an example. For an Internet service in an Aly IDC, a data center usually having a "high priority" (which may be the SLB router of the site A in FIG. 3) provides a service for a client. Once the data center becomes unavailable, the border routing protocol BGP will converge quickly (within 180 seconds in the worst case, and within 30 seconds in a normal case). In this case, a data center having a "low priority" keeps serving the user in place of the failed data center (having a "high priority"). When a single data center is unavailable, for example, when the active data center is unavailable or fails, fail-over migration may be performed to copy data in the active data center to the standby data center, and switching is performed from the active data center to the standby data center, such that the standby data center allocates service traffic.

By means of the solution provided in the foregoing step S24, when the active data center is unavailable, switching is performed from the active data center to the standby data center. Therefore, switching is performed from the active data center to the standby data center when the active data center fails and becomes unavailable, such that the standby data center provides services for users.

In the foregoing embodiment of the present application, in step S24, before switching is performed from the active data center to the standby data center, the method may further include the following step: Step S26, data is synchronized in real time between the active data center and the standby data center.

Specifically, the active data center and the standby data center have a mutually redundant relationship. Data in the active data center can be copied to the standby data center in real time. Therefore, when the active data center (or the standby data center) fails, the standby data center (or the active data center) can take over an application within a short time, thus ensuring continuity of the application.

In an optional solution, to ensure that the load balancing device in the standby data center can allocate traffic transmitted to the active data center after switching is performed from the active data center to the standby data center, data synchronization between the active data center and the standby data center needs to be ensured. The storage device in the active data center may communicate with the storage device in the standby data center, and data is synchronized in real time between the active data center and the standby data center, thus ensuring data synchronization between the two data centers.

For example, the foregoing embodiment of the present application is described in detail by still taking the application scenario shown in FIG. 3 as an example. An active data center (which may be the SLB router of the site A in FIG. 3) may communicate with a standby data center (which may be the SLB router of the site B in FIG. 3), and data in the two storage devices is synchronized in real time. Moreover, in the case of switching from the active data center to the standby data center, the data in the active data center is copied to the standby data center, thus ensuring data synchronization between the standby data center and the active data center.

By means of the solution provided in the foregoing step S26, data can be synchronized between the active data center and the standby data center in real time. Therefore, after switching is performed from the active data center to the standby data center, the load balancing device in the standby data center can allocate service traffic transmitted to the active data center, thus ensuring the availability of a service of a user.

In the above embodiment of the present application, the load balancing device may include any one or more types as follows: a layer-3 load balancing device, a layer-4 load balancing device, a layer-5 load balancing device, a layer-6 load balancing device, and a layer-7 load balancing device.

Specifically, the layer-3 load balancing device in the foregoing step is based on an IP address. A request can be received by using a virtual IP address, and the request is then allocated to a real IP address. The layer-4 load balancing device is based on an IP address and port. A request can be received by using a virtual IP address and port, and the request is then allocated to a real server. The layer-7 load balancing device is based on application layer information such as a URL. A request can be received by using a virtual URL address or host name, and the request is then allocated to a real server.

In an optional solution, the layer-4 load balancing device can publish a layer-3 IP address (VIP) and add a layer-4 port number to determine traffic on which load balancing processing needs to be performed. The traffic on which load balancing processing needs to be performed is forwarded to a back-end server, and identification information of the back-end server to which the traffic is forwarded is stored, thus ensuring that all subsequent traffic is processed by the same server.

In another optional solution, based on the layer-4 load balancing device, the layer-7 load balancing device may further be provided with application layer features, for example, a URL address, an HTTP protocol, Cookie, or other information, to determine the traffic on which load balancing processing needs to be performed.

In the foregoing embodiment of the present application, when the load balancing device includes a layer-4 load balancing device, step S22 of allocating service traffic by the load balancing device in the standby data center may include the following steps:
Step S222: The layer-4 load balancing device in the standby data center selects a target server according to a scheduling strategy.
Step S224: The layer-4 load balancing device allocates the service traffic to the target server through an LVS cluster.

Specifically, the scheduling strategy in the foregoing step may include, but is not limited to, a polling manner, a URL scheduling strategy, a URL hash scheduling strategy, or a consistency hash scheduling strategy. The layer-4 load balancing device can send data traffic to an LVS cluster through ECMP routing, and the LVS cluster forwards the data traffic to the target server.

In an optional solution, the layer-4 load balancing device is connected to a plurality of servers. After a request packet sent by a user of a first network is received, address (including a source address and a destination address) and port conversion may be performed on the request packet to generate a request packet of a second network. A target server is determined from among the plurality of servers by using a scheduling strategy, and the LVS cluster sends the request packet of the second network to the corresponding target server. The target server may return, by using a source address mapping manner, a returned response packet of the second network to the layer-4 load balancing device. After receiving the response packet of the second network, the layer-4 load balancing device performs address and port conversion on the response packet of the second network to generate a response packet of the first network, and returns the response packet of the first network to the user.

Here, it should be noted that the request packet of the first network and the response packet of the first network are packets of the same network type. The request packet of the second network and the response packet of the second network are packets of the same network type.

FIG. 4 is a schematic diagram of a deployment modeoflayer-4 load balancing according to Embodiment 1 of the present application. For example, the foregoing embodiment of the present application is described in detail by taking an application scenario shown in FIG. 4 as an example. For a layer-4 user in a public cloud with SLB, in a layer-4 area, a virtual machine (VM) represents a corresponding user instance. A proxy server represents a proxy component of the SLB, and can indicate a layer-4 load balancing device. SLB in a data center can guide service traffic by performing health check. In a normal state, one piece of monitored traffic is forwarded by only one data center. In the case of switching from an active data center (which may be a site A in FIG. 4) to a standby data center (which may be a site B in FIG. 4), a layer-4 load balancing device in the standby data center selects a target server according to a scheduling strategy, and allocates service traffic to the target server through an LVS cluster.

By means of the solution provided in the foregoing step S222 to step S224, a load balancing device can determine a target server by using a scheduling strategy, and allocate traffic to the target server through an LVS cluster, thus ensuring availability of a user service and improving the stability of a load balancing service.

In the foregoing embodiment of the present application, the scheduling strategy includes: determining the target server by checking online states or resource usage of a plurality of back-end service servers, wherein a control server in the standby data center configures a scheduling strategy, and when any data center is allowed to access each back-end service group, cross traffic may be generated when the LVS cluster forwards the service traffic in the plurality of back-end service servers.

In an optional solution, to ensure that more service requests can be allocated to a server that processes a few service requests or a failed server can stop receiving a service request until a failure is fixed, an optimal target server can be determined by determining whether there is a failed server in a plurality of back-end service serversby checking online states of the service servers and by determining the number of service requests processed by each service server by checking the resource usage of the plurality of back-end service servers.

For example, the foregoing embodiment of the present application is described in detail by still taking the application scenario shown in FIG. 4 as an example. For a layer-4 user in a public cloud with SLB, in a layer-4 area, a VM may represent a corresponding user instance, and all instances are visible to all data centers. Therefore, cross traffic may occur when the LVS cluster forwards the service traffic.

By means of the foregoing solution, a target server can be determined by checking online states or resource usage of a plurality of back-end service servers, such that the plurality of back-end service servers can better accomplish tasks together, thus eliminating or avoiding existing bottlenecks of uneven distribution of network load and long response time due to data traffic congestion.

In the foregoing embodiment of the present application, when the load balancing device includes a layer-7 load balancing device, step S22 of allocating service traffic by the load balancing device in the standby data center may include the following steps:
Step S226: The layer-7 load balancing device in the standby data center selects a target server according to a scheduling strategy.
Step S228: The layer-7 load balancing device allocates the service traffic to the target server through an LVS cluster.

Specifically, the scheduling strategy in the foregoing step may be the same as or different from the scheduling strategy of the layer-4 load balancing device. The layer-7 load balancing device can send data traffic to an LVS cluster through ECMP routing, and the LVS cluster forwards the data traffic to the target server.

In an optional solution, the layer-7 load balancing device is connected to a plurality of servers. After receiving a request packet sent by a user of a first network, the layer-7 load balancing device can establish a connection with a client terminal through a proxy server to receive a packet of real application layer content sent by the client terminal, and determine a target server according to a specific field (e.g., a header of an HTTP packet) in the packet and according to a scheduling strategy.

Here, it should be noted that the load balancing device is more similar to a proxy server in this case. The load balancing device will establish a TCP connection respectively with a front-end client terminal and a back-end server. Therefore, the layer-7 load balancing device has a higher requirement and a lower processing capability than the layer-4 load balancing device.

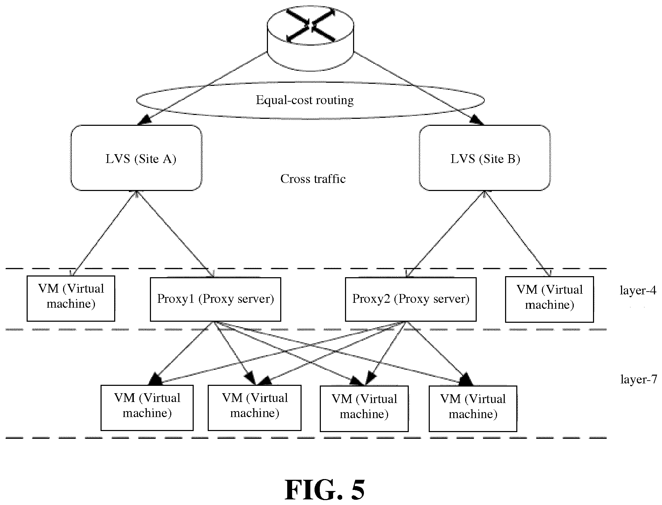

FIG. 5 is a schematic diagram of a deployment modeoflayer-7 load balancing according to Embodiment 1 of the present application. For example, the foregoing embodiment of the present application is described in detail by taking an application scenario shown in FIG. 5 as an example. For a layer-7 user in a public cloud with SLB, in a layer-4 area, a proxy server represents a proxy component of the SLB, and can indicate a layer-7 load balancing device. SLB in a data center can guide service traffic by performing health check. In a normal state, one piece of monitored traffic is forwarded by only one data center. In the case of switching from an active data center (which may be a site A in FIG. 5) to a standby data center (which may be a site B in FIG. 5), a layer-7 load balancing device in the standby data center selects a target server according to a scheduling strategy, and allocates service traffic to the target server through an LVS cluster.

By means of the solution provided in the foregoing step S226 to step S228, a load balancing device can determine a target server by using a scheduling strategy, and allocate traffic to the target server through an LVS cluster, thus ensuring availability of a user service, avoiding a failure in an application layer, and improving the stability of a load balancing service.

In the foregoing embodiment of the present application, the scheduling strategy includes: determining the target server by checking online states or resource usage of a plurality of back-end service servers, wherein a control server in the standby data center configures a scheduling strategy, and when only the current standby data center is allowed to access a plurality of back-end service groups, at least one back-end service server that has a connection relationship and isallocated to each LVS in the LVS cluster differs, such that no cross traffic is generated when the plurality of back-end service servers forward the service traffic.

In an optional solution, to ensure that more service requests can be allocated to a server that processes a few service requests or a failed server can stop receiving a service request until a failure is fixed, an optimal target server can be determined by determining whether there is a failed server in a plurality of back-end service serversby checking online states of the service servers and by determining the number of service requests processed by each service server by checking the resource usage of the plurality of back-end service servers.

For example, the foregoing embodiment of the present application is described in detail by still taking the application scenario shown in FIG. 5 as an example. For a layer-7 user in a public cloud with SLB, in a layer-4 area, a proxy server represents a proxy component of the SLB, and all instances thereof are visible to all data centers. Therefore, cross traffic may occur when the LVS cluster forwards the service traffic, and a proxy component in a data center is only visible to SLB in the current data center. As such, it is avoided that traffic of the layer-7 user crosses into the L4 area to increase an unnecessary delay.

By means of the foregoing solution, a target server can be determined by checking online states or resource usage of a plurality of back-end service servers, such that the plurality of back-end service servers can excellently accomplish tasks together, thus eliminating or avoiding existing bottlenecks of uneven distribution of network load and long response time due to data traffic congestion.

In the foregoing embodiment of the present application, a control server in a standby data center configures an RDS database corresponding to the current data center, such that no cross traffic is generated when the RDS database stores the service traffic in the case in which only the current standby data center is allowed to access the RDS database.

For example, the foregoing embodiment of the present application is described in detail by taking the application scenario shown in FIG. 5 as an example. For a user of an RDS, in a layer-4 area, a VM represents adatabaseof the RDS. The RDS is sensitive to a delay, and therefore an id of a data center in which the database of the RDS is located is designated during configuration, such that an SLB configuration system ensures that the id of the data center is only visible to an SLB in the current data center, thus avoiding cross traffic and reducing an unnecessary delay.

A preferred embodiment of the present application is introduced in detail in the following with reference to FIG. 3, FIG. 4, FIG. 5, and FIG. 6.

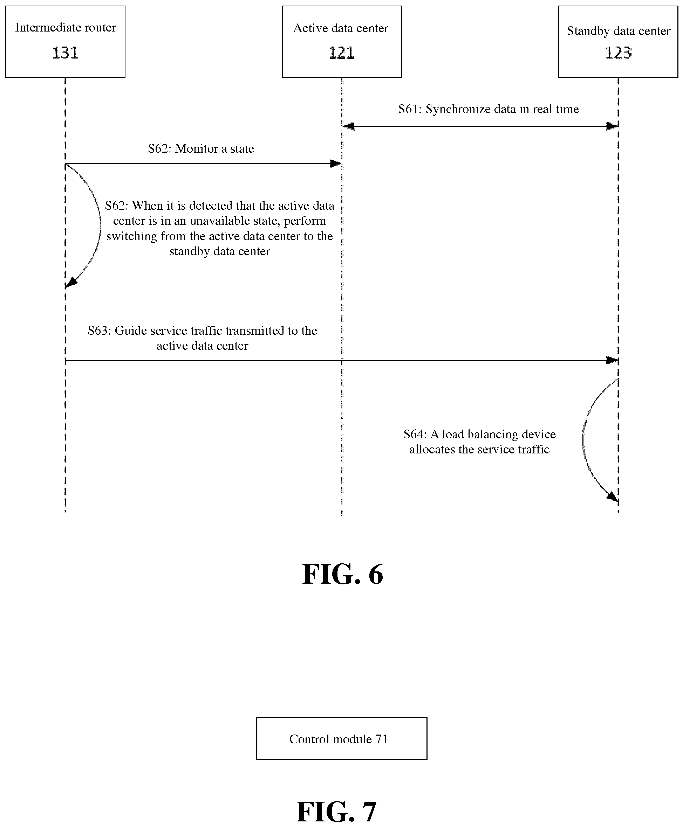

As shown in FIG. 6, as an application scenario, an optional method for controlling service traffic between data centers is provided. The method may include the following steps S61 to S64.

Step S61: An active data center 121 synchronizes data with a standby data center 123 in real time.

Optionally, the active data center and the standby data center may have a mutually redundantrelationship, and data in the active data center can be copied to the standby data center in real time.

Step S62: An intermediate router 131 monitors a state of the active data center 121, and performs switching from the active data center to the standby data center when detecting that the active data center is in an unavailable state.

Optionally, when detecting that the active data center is in a power-off state, a failed state, an intrusion state, or an overflow state, the intermediate router determines that the active data center is in an unavailable state, lowers the priority of the active data center, and raises the priority of the standby data center to perform switching from the active data center to the standby data center.

Step S63: The intermediate router 131guides service traffic transmitted to the active data center to the standby data center 123.

Optionally, a load balancing device in the active data center can perform address and port conversion on service traffic sent by a user, and send the service traffic sent by the user to a load balancing device in the standby data center.

Step S64: The load balancing device in the standby data center 123 allocates the service traffic.

Optionally, the load balancing device may be: a layer-3 load balancing device, a layer-4 load balancing device, a layer-5 load balancing device, a layer-6 load balancing device, and a layer-7 load balancing device. The load balancing device may select a target server according to a scheduling strategy, and allocate the service traffic to the target server through an LVS cluster.

By means of the foregoing solution, an active data center may synchronize data with a standby data center in real time. When it is detected that the active data center is in an unavailable state, switching is performed from the active data center to the standby data center, and service traffic transmitted to the active data center is guided to the standby data center, such that a load balancing device in the standby data center allocates the service traffic. As a result, when the entire data center fails and becomes unavailable, an Internet service in an IDC can still be restored within a short time.

It should be noted that, for brevity, the foregoing method embodiments are described as a series of action combinations. However, those skilled in the art should understand that the present application is not limited to the described action order, because some steps may be performed in another order or performed simultaneouslyaccording to the present application. Moreover, those skilled in the art should also understand that the embodiments described in the specification all belong to preferred embodiments, and the involved actions and modules are not necessarily required by the present application.

Based on the foregoing descriptions of the implementation manners, those skilled in the art may clearly understand that the method for controlling service traffic between data centers according to the above embodiment may be implemented by software plus a necessary universal hardware platform, and definitely, may also be implemented by hardware. However, in most cases, the former is a preferred implementation manner. Based on such an understanding, the technical solutions of the present application essentially, or the part contributing to the prior art, may be implemented in the form of a software product. The computer software product may be stored in a storage medium (such as a Read-Only Memory (ROM)/Random Access Memory (RAM), a magnetic disk, or an optical disc), and includes several instructions for instructing a terminal device (which may be a mobile phone, a computer, a server, a network device, or the like) to perform the methods in the embodiments of the present application.

### Embodiment 2

According to this embodiment of the present application, an apparatus for controlling service traffic between data centers used for performing a method for controlling service traffic between data centers is further provided. As shown in FIG. 7, the apparatus includes a control module 71.

The control module 71 is configured to, in the case of switching from an active data center to a standby data center, guide service traffic transmitted to the active data center to the standby data center, such that aload balancing device in the standby data center allocates the service traffic, wherein the active data center and the standby data center have a mutually redundant relationship, and at least one load balancing device is respectively deployed in the active data center and the standby data center.

Specifically, the active data center and the standby data center in the above step may be two data centers (IDC rooms) in the same region. A data center with a high priority in a data center cluster may be set as the active data center, and a data center with a low priority may be set as the standby data center. After switching is performed from the active data center to the standby data center, data in the active data center may be migrated to the standby data center. A storage device in the active data center communicates with a storage device in the standby data center, and data in the storage device in the active data center is synchronized to the storage device in the standby data center in real time. The standby data center creates a corresponding service network and a service server according to network information of a service server, network device configuration information, and service server information. Service traffic transmitted to the active data center is guided to the standby data center. Specifically, the load balancing device in the active data center may perform address and port conversion on service traffic sent by a user, and send the service traffic sent by the user to the load balancing device in the standby data center. The load balancing device may forward the service traffic to a target server according to a load balancing algorithm.

Here, it should be noted that the control module 71 corresponds to step S22 in Embodiment 1, and examples and application scenarios implemented by the module and the corresponding step are the same, but are not limited to content disclosed in Embodiment 2. It should be noted that the module can run in the computer terminal 10 provided in Embodiment 1 as a part of the apparatus.

In the solution disclosed in Embodiment 2 of the present application, an active data center and a standby data center have a mutually redundant relationship, at least one load balancing device being respectively deployed in the active data center and the standby data center, wherein in the case of switching from the active data center to the standby data center, service traffic transmitted to the active data center can be guided to the standby data center in the solution, such that the load balancing device in the standby data center allocates the service traffic, thus implementing migration of the service traffic.

It is easily noted that the active data center and the standby data center have a mutually redundant relationship, and data in the active data center can be synchronized to the standby data center in real time. When the active data center fails and becomes unavailable, switching can be performed from the active data center to the standby data center, such that the load balancing device in the standby data center allocates the traffic. Therefore, by means of the solution provided in the embodiment of the present application, once a catastrophic failure occurs in a data center (e.g., an active data center), service traffic can be quickly migrated to another data center (e.g., a standby data center), and service functions can be restored in the another data center within a short time, thus reducing corresponding waiting time of users, enhancing network data processing capability, and improving flexibility and availability of the network.

Accordingly, the solution of the foregoing Embodiment 2 provided in the present application solves the technical problem in the prior art that an Internet service in an IDC is interrupted when a data center fails and becomes unavailable.

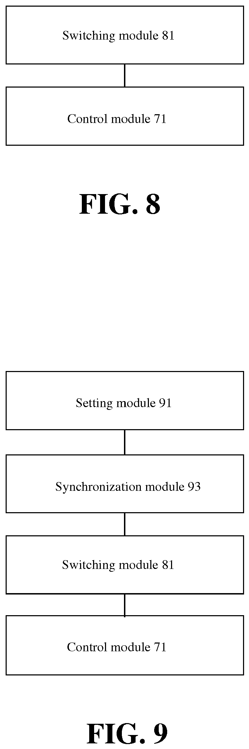

In the foregoing embodiment of the present application, as shown in FIG. 8, the apparatus may further include a switching module 81.

The switching module 81 is configured to monitor the active data center, and perform switching from the active data center to the standby data centerif detecting that the active data center is in an unavailable state.

Specifically, the unavailable state at least includes any one of the following states: a power-off state, a failed state, an intrusion state, and an overflow state.

Here, it should be noted that the switching module 81 corresponds to step S24 in Embodiment 1, and examples and application scenarios implemented by the module and the corresponding step are the same, but are not limited to content disclosed in Embodiment 2. It should be noted that the module can run in the computer terminal 10 provided in Embodiment 1 as a part of the apparatus.

By means of the foregoing solution, when the active data center is unavailable, switching is performed from the active data center to the standby data center. Therefore, switching is performed from the active data center to the standby data center when the active data center fails and becomes unavailable, such that the standby data center provides services for users.

In the foregoing embodiment of the present application, as shown in FIG. 9, the apparatus may further include a setting module 91 and a synchronization module 93.

The setting module 91 is configured to set a data center having a high priority in a data center cluster as the active data center, and set a data center having a low priority as the standby data center. The synchronization module 93 is configured to synchronize data between the active data center and the standby data center in real time.

Specifically, the active data center and the standby data center have a mutually redundant relationship. Data in the active data center can be copied to the standby data center in real time. Therefore, when the active data center (or the standby data center) fails, the standby data center (or the active data center) can take over an application within a short time, thus ensuring continuity of the application.

Here, it should be noted that the synchronization module 93 corresponds to step S26 in Embodiment 1, and examples and application scenarios implemented by the module and the corresponding step are the same, but are not limited to content disclosed in Embodiment 2. It should be noted that the module can run in the computer terminal 10 provided in Embodiment 1 as a part of the apparatus.

By means of the foregoing solution, data can be synchronized between the active data center and the standby data center in real time. Therefore, after switching is performed from the active data center to the standby data center, the load balancing device in the standby data center can allocate service traffic transmitted to the active data center, thus ensuring the availability of a service of a user.

In the above embodiment of the present application, the load balancing device includes any one or more types as follows: a layer-3 load balancing device, a layer-4 load balancing device, a layer-5 load balancing device, a layer-6 load balancing device, and a layer-7 load balancing device.

Specifically, the layer-3 load balancing device in the foregoing step is based on an IP address. A request can be received by using a virtual IP address, and the request is then allocated to a real IP address. The layer-4 load balancing device is based on an IP address and port. A request can be received by using a virtual IP address and port, and the request is then allocated to a real server. The layer-7 load balancing device is based on application layer information such as a URL. A request can be received by using a virtual URL address or host name, and the request is then allocated to a real server.

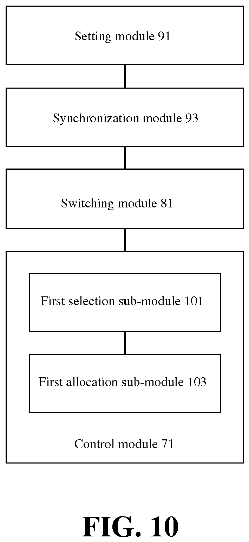

In the foregoing embodiment of the present application, as shown in FIG. 10, when the load balancing device includes a layer-4 load balancing device, the control module 71 may further include a first selection sub-module 101 and a first allocation sub-module 103.

The first selection sub-module 101 is configured to select a target server according to a scheduling strategy. The first allocation sub-module 103 is configured to allocate the service traffic to the target server through an LVS cluster.

Specifically, the scheduling strategy in the foregoing step may include, but is not limited to, a polling manner, a URL scheduling strategy, a URL hash scheduling strategy, or a consistency hash scheduling strategy. The layer-4 load balancing device can send data traffic to an LVS cluster through ECMP routing, and the LVS cluster forwards the data traffic to the target server.

Here, it should be noted that the first selection sub-module 101 and the first allocation sub-module 103 correspond to step S222 to step S224 in Embodiment 1, and examples and application scenarios implemented by the two modules and the corresponding steps are the same, but are not limited to content disclosed in Embodiment 2. It should be noted that the modules can run in the computer terminal 10 provided in Embodiment 1 as a part of the apparatus.

By means of the foregoing solution, a load balancing device can determine a target server by using a scheduling strategy, and allocate traffic to the target server through an LVS cluster, thus ensuring availability of a user service and improving the stability of a load balancing service.

In the foregoing embodiment of the present application, the scheduling strategy includes: determining the target server by checking online states or resource usage of a plurality of back-end service servers, wherein a control server in the standby data center configures a scheduling strategy, and when any data center is allowed to access each back-end service group, cross traffic may be generated when the LVS cluster forwards the service traffic in the plurality of back-end service servers.

By means of the foregoing solution, a target server can be determined by checking online states or resource usage of a plurality of back-end service servers, such that the plurality of back-end service servers can excellently accomplish tasks together, thus eliminating or avoiding existing bottlenecks of uneven distribution of network load and long response time due to data traffic congestion.

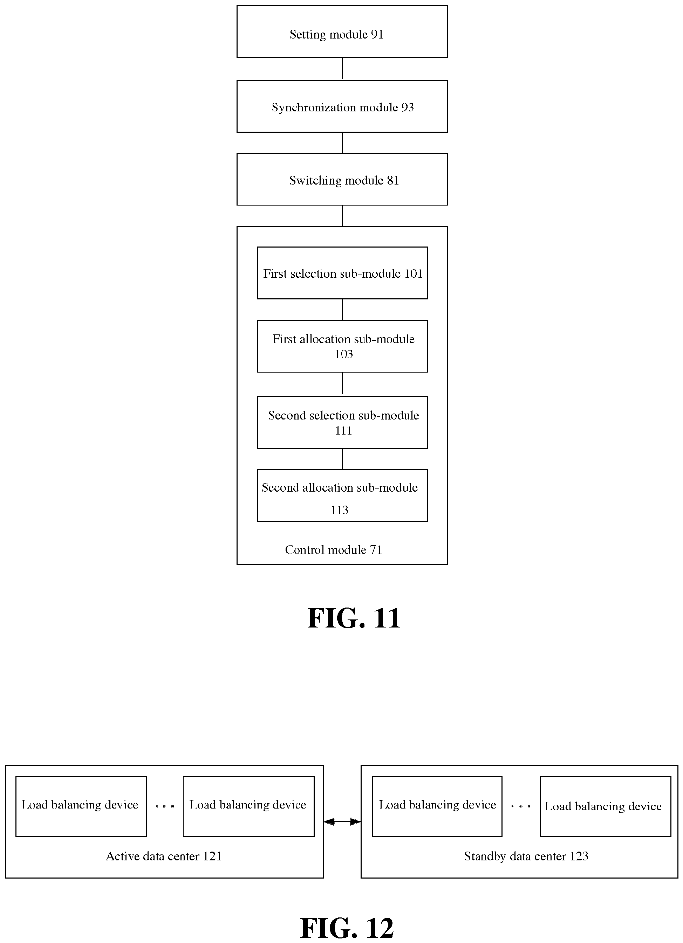

In the foregoing embodiment of the present application, as shown in FIG. 11, when the load balancing device includes a layer-7 load balancing device, the control module 71 may further include a second selection sub-module 111 and a second allocation sub-module 113.

The second selection sub-module 111 is configured to select a target server according to a scheduling strategy. The second allocation sub-module 113 is configured to allocate the service traffic to the target server through an LVS cluster.

Specifically, the scheduling strategy in the foregoing step may be the same as or different from the scheduling strategy of the layer-4 load balancing device. The layer-7 load balancing device can send data traffic to an LVS cluster through ECMP routing, and the LVS cluster forwards the data traffic to the target server.

Here, it should be noted that the load balancing device is more similar to a proxy server in this case. The load balancing device will establish a TCP connection respectively with a front-end client terminal and a back-end server. Therefore, the layer-7 load balancing device has a higher requirement and a lower processing capability than the layer-4 load balancing device.

Here, it should be noted that the second selection sub-module 111 and the second allocation sub-module 113 correspond to step S226 to step S228 in Embodiment 1, and examples and application scenarios implemented by the two modules and the corresponding steps are the same, but are not limited to content disclosed in Embodiment 2. It should be noted that the modules can run in the computer terminal 10 provided in Embodiment 1 as a part of the apparatus.

By means of the foregoing solution, a load balancing device can determine a target server by using a scheduling strategy, and allocate traffic to the target server through an LVS cluster, thus ensuring availability of a user service, avoiding a failure in an application layer, and improving the stability of a load balancing service.

In the foregoing embodiment of the present application, the scheduling strategy includes: determining the target server by checking online states or resource usage of a plurality of back-end service servers, wherein a control server in the standby data center configures a scheduling strategy, and when only the current standby data center is allowed to access a plurality of back-end service groups, at least one back-end service server that has a connection relationship and is allocated to each LVS in the LVS cluster differs, such that no cross traffic is generated when the plurality of back-end service servers forward the service traffic.

By means of the foregoing solution, a target server can be determined by checking online states or resource usage of a plurality of back-end service servers, such that the plurality of back-end service servers can excellently accomplish tasks together, thus eliminating or avoiding existing bottlenecks of uneven distribution of network load and long response time due to data traffic congestion.

In the foregoing embodiment of the present application, a control server in a standby data center configures an RDS database corresponding to the current data center, such that no cross traffic is generated when the RDS database stores the service traffic in the case in which only the current standby data center is allowed to access the RDS database.

### Embodiment 3

According to this embodiment of the present application, a system for controlling service traffic between data centers is further provided. As shown in FIG. 12, the system may include an active data center 121 and a standby data center 123.

At least one load balancing device configured to receive and forward service trafficisdeployed in the active data center 121. The standby data center 123 has a mutually redundant relationship with the active data center 121, and at least one load balancing deviceisdeployed in the standby data center 123. In the case of switching from the active data center to the standby data center, service traffic is guided to the standby data center, and the load balancing device in the standby data center allocates the service traffic.

Specifically, the active data center and the standby data center in the above step may be two data centers (IDC rooms) in the same region. A data center with a high priority in a data center cluster may be set as the active data center, and a data center with a low priority may be set as the standby data center. After switching is performed from the active data center to the standby data center, data in the active data center may be migrated to the standby data center. A storage device in the active data center communicates with a storage device in the standby data center, and data in the storage device in the active data center is synchronized to the storage device in the standby data center in real time. The standby data center creates a corresponding service network and a service server according to network information of a service server, network device configuration information, and service server information. Service traffic transmitted to the active data center is guided to the standby data center. Specifically, the load balancing device in the active data center may perform address and port conversion on service traffic sent by a user, and send the service traffic sent by the user to the load balancing device in the standby data center. The load balancing device may forward the service traffic to a target server according to a load balancing algorithm.

For example, the foregoing embodiment of the present application is described in detail by taking the application scenario shown in FIG. 3 as an example. For an Internet service in an Aly IDC, an IP address of the Internet service in the IDC in the same region may be announced (published by BGP routing) simultaneously in two rooms with different "priorities." As shown in FIG. 3, a BGP route announcement of an SLB router of a site A is: X.Y.Z.0/24; and a BGP route announcement of an SLB router of a site B is: X.Y.Z.0/25, X.Y.Z.128/25. A data center with a high priority is an active data center (which may be the SLB router of the site A in FIG. 3), and a data center with a low priority is a standby data center (which may be the SLB router of the site B in FIG. 3). A mutually redundant relationship is implemented between the active data center and the standby data center. In a normal case, 1/2 VIPs with high priorities run in two different IDCs. In the case of switching from the active data center to the standby data center, service traffic transmitted to the active data center can be guided to the standby data center. A load balancing device in the standby data center allocates the received service traffic to a corresponding service server by using a load balancing algorithm.

In the solution disclosed in Embodiment 3 of the present application, an active data center and a standby data center have a mutually redundant relationship, at least one load balancing device being respectively deployed in the active data center and the standby data center, wherein in the case of switching from the active data center to the standby data center, service traffic transmitted to the active data center can be guided to the standby data center in the solution, such that the load balancing device in the standby data center allocates the service traffic, thus implementing migration of the service traffic.

It is easily noted that the active data center and the standby data center have a mutually redundant relationship, and data in the active data center can be synchronized to the standby data center in real time. When the active data center fails and becomes unavailable, switching can be performed from the active data center to the standby data center, such that the load balancing device in the standby data center allocates the traffic. Therefore, by means of the solution provided in the embodiment of the present application, once a catastrophic failure occurs in a data center (e.g., an active data center), service traffic can be quickly migrated to another data center (e.g., a standby data center), and service functions can be restored in the another data center within a short time, thus reducing corresponding waiting time of users, enhancing network data processing capability, and improving flexibility and availability of the network.

Accordingly, the solution of the foregoing Embodiment 3 provided in the present application solves the technical problem in the prior art that an Internet service in an IDC is interrupted when a data center fails and becomes unavailable.

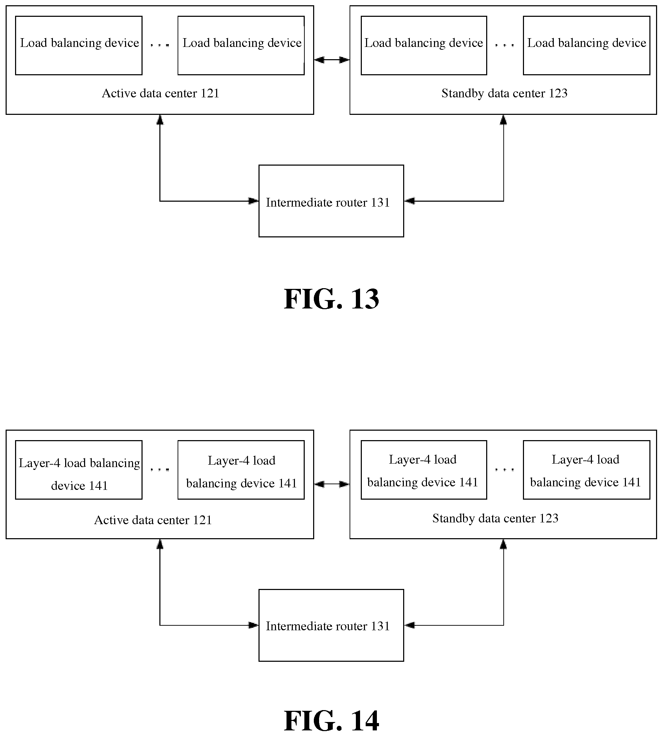

In the foregoing embodiment of the present application, as shown in FIG. 13, the apparatus may further include an intermediate router 131.

The intermediate router 131 is configured to monitor the active data center, and perform switching from the active data center to the standby data center if detecting that the active data center is in an unavailable state.

Specifically, the unavailable state at least includes any one of the following states: a power-off state, a failed state, an intrusion state, and an overflow state.

In an optional solution, when detecting that the active data center is unavailable, the intermediate router may deliver a data center switching instruction. The active data center may lower its own priority after the storage device in the active data center receives the data center switching instruction, and the standby data center may raise its own priority after the storage device in the standby data center receives the data center switching instruction, such that switching is performed from the active data center to the standby data center.

For example, the foregoing embodiment of the present application is described in detail by still taking the application scenario shown in FIG. 3 as an example. For an Internet service in an Aly IDC, a data center usually having a "high priority" (which may be the SLB router of the site A in FIG. 3) provides a service for a client. Once the data center becomes unavailable, the border routing protocol BGP will converge quickly (within 180 seconds in the worst case, and within 30 seconds in a normal case). In this case, a data center having a "low priority" keeps serving the userinplace of the failed data center (having a "high priority"). When a single data center is unavailable, for example, when the active data center is unavailable or fails, fail-over migration may be performed to copy data in the active data center to the standby data center, and switching is performed from the active data center to the standby data center, such that the standby data center allocates service traffic.

By means of the foregoing solution, when the active data center is unavailable, switching is performed from the active data center to the standby data center. Therefore, switching is performed from the active data center to the standby data center when the active data center fails and becomes unavailable, such that the standby data center provides services for users.

In the foregoing embodiment of the present application, the active data center 121 is further configured to, before switching is performed from the active data center to the standby data center, synchronize data to the standby data center in real time.

Specifically, the active data center and the standby data center have a mutually redundant relationship. Data in the active data center can be copied to the standby data center in real time. Therefore, when the active data center (or the standby data center) fails, the standby data center (or the active data center) can take over an application within a short time, thus ensuring continuity of the application.

In an optional solution, to ensure that the load balancing device in the standby data center can allocate traffic transmitted to the active data center after switching is performed from the active data center to the standby data center, data synchronization between the active data center and the standby data center needs to be ensured. The storage device in the active data center may communicate with the storage device in the standby data center, and data is synchronized in real time between the active data center and the standby data center, thus ensuring data synchronization between the two data centers.

For example, the foregoing embodiment of the present application is described in detail by still taking the application scenario shown in FIG. 3 as an example. An active data center (which may be the SLB router of the site A in FIG. 3) may communicate with a standby data center (which may be the SLB router of the site B in FIG. 3), and data in the two storage devices is synchronized in real time. Moreover, in the case of switching from the active data center to the standby data center, the data in the active data center is copied to the standby data center, thus ensuring data synchronization between the standby data center and the active data center.

By means of the foregoing solution, data can be synchronized between the active data center and the standby data center in real time. Therefore, after switching is performed from the active data center to the standby data center, the load balancing device in the standby data center can allocate service traffic transmitted to the active data center, thus ensuring the availability of a service of a user.

In the above embodiment of the present application, the load balancing device includes any one or more types as follows: a layer-3 load balancing device, a layer-4 load balancing device, a layer-5 load balancing device, a layer-6 load balancing device, and a layer-7 load balancing device.

Specifically, the layer-3 load balancing device in the foregoing step is based on an IP address. A request can be received by using a virtual IP address, and the request is then allocated to a real IP address. The layer-4 load balancing device is based on an IP address and port. A request can be received by using a virtual IP address and port, and the request is then allocated to a real server. The layer-7 load balancing device is based on application layer information such as a URL. A request can be received by using a virtual URL address or host name, and the request is then allocated to a real server.

In an optional solution, the layer-4 load balancing device can publish a layer-3 IP address (VIP) and add a layer-4 port number to determine traffic on which load balancing processing needs to be performed. The traffic on which load balancing processing needs to be performed is forwarded to a back-end server, and identification information of the back-end server to which the traffic is forwarded is stored, thus ensuring that all subsequent traffic is processed by the same server.

In another optional solution, based on the layer-4 load balancing device, the layer-7 load balancing device may further be provided with application layer features, for example, a URL address, an HTTP protocol, Cookie, or other information, to determine the traffic on which load balancing processing needs to be performed.

In the foregoing embodiment of the present application, as shown in FIG. 14, the load balancing device includes a layer-4 load balancing device 141.

The layer-4 load balancing device 141 is configured to select a target server according to a scheduling strategy, and allocate the service traffic to the target server through an LVS cluster.

Specifically, the scheduling strategy in the foregoing step may include, but is not limited to, a polling manner, a URL scheduling strategy, a URL hash scheduling strategy, or a consistency hash scheduling strategy. The layer-4 load balancing device can send data traffic to an LVS cluster through ECMP routing, and the LVS cluster forwards the data traffic to the target server.

In an optional solution, the layer-4 load balancing device is connected to a plurality of servers. After a request packet sent by a user of a first network is received, address (including a source address and a destination address) and port conversion may be performed on the request packet, to generate a request packet of a second network. A target server is determined from among the plurality of servers by using a scheduling strategy, and the LVS cluster sends the request packet of the second network to the corresponding target server. The target server may return, by using a source address mapping manner, a returned response packet of the second network to the layer-4 load balancing device. After receiving the response packet of the second network, the layer-4 load balancing device performs address and port conversion on the response packet of the second network to generate a response packet of the first network, and returns the response packet of the first network to the user.

Here, it should be noted that, the request packet of the first network and the response packet of the first network are packets of the same network type. The request packet of the second network and the response packet of the second network are packets of the same network type.

For example, the foregoing embodiment of the present application is described in detail by taking the application scenario shown in FIG. 4 as an example. For a layer-4 user in a public cloud with SLB, in a layer-4 area, a VM represents a corresponding user instance. SLB in a data center can guide service traffic by performing health check. In a normal state, one piece of monitored traffic is forwarded by only one data center. In the case of switching from an active data center (which may be a site A in FIG. 4) to a standby data center (which may be a site B in FIG. 4), a layer-4 load balancing device in the standby data center selects a target server according to a scheduling strategy, and allocates service traffic to the target server through an LVS cluster.

By means of the foregoing solution, a load balancing device can determine a target server by using a scheduling strategy, and allocate traffic to the target server through an LVS cluster, thus ensuring availability of a user service and improving the stability of a load balancing service.

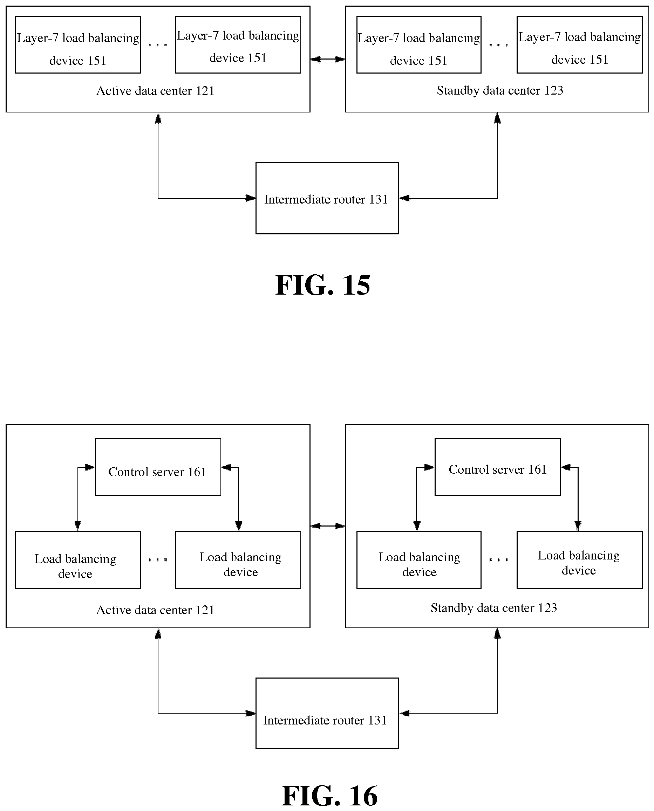

In the foregoing embodiment of the present application, as shown in FIG. 15, the load balancing device includes a layer-7 load balancing device 151.

The layer-7 load balancing device 151 is configured to select a target server according to a scheduling strategy, and allocate the service traffic to the target server through an LVS cluster.

Specifically, the scheduling strategy in the foregoing step may be the same as or different from the scheduling strategy of the layer-4 load balancing device. The layer-7 load balancing device can send data traffic to an LVS cluster through ECMP routing, and the LVS cluster forwards the data traffic to the target server.

In an optional solution, the layer-7 load balancing device is connected to a plurality of servers. After receiving a request packet sent by a user of a first network, the layer-7 load balancing device can establish a connection with a client terminal through a proxy server to receive a packet of real application layer content sent by the client terminal, and determine a target server according to a specific field (e.g., a header of an HTTP packet) in the packet and according to a scheduling strategy.

Here, it should be noted that the load balancing device is more similar to a proxy server in this case. The load balancing device will establish a TCP connection respectively with a front-end client terminal and a back-end server. Therefore, the layer-7 load balancing device has a higher requirement and a lower processing capability than the layer-4 load balancing device.

For example, the foregoing embodiment of the present application is described in detail by taking the application scenario shown in FIG. 5 as an example. For a layer-7 user in a public cloud with SLB, in a layer-4 area, a proxy server represents a proxy component of the SLB. SLB in a data center can guide service traffic by performing health check. In a normal state, one piece of monitored traffic is forwarded by only one data center. In the case of switching from an active data center (which may be a site A in FIG. 5) to a standby data center (which may be a site B in FIG. 5), a layer-7 load balancing device in the standby data center selects a target server according to a scheduling strategy, and allocates service traffic to the target server through an LVS cluster.

By means of the foregoing solution, a load balancing device can determine a target server by using a scheduling strategy, and allocate traffic to the target server through an LVS cluster, thus ensuring availability of a user service, avoiding a failure in an application layer, and improving the stability of a load balancing service.

In the foregoing embodiment of the present application, as shown in FIG. 16, the standby data center 121 further includes a control server 161.

The control server 161 is connected to the layer-4 load balancing device and the layer-7 load balancing device respectively, to configure a scheduling strategy.

In the foregoing embodiment of the present application, when the load balancing device includes a layer-4 load balancing device, the scheduling strategy includes: determining the target server by checking online states or resource usage of a plurality of back-end service servers. The control server 161 is further configured that, when any data center is allowed to access each back-end service group, cross traffic may be generated when the LVS cluster forwards the service traffic in the plurality of back-end service servers.

In an optional solution, to ensure that more service requests can be allocated to a server that processes a few service requests or a failed server can stop receiving a service request until a failure is fixed, an optimal target server can be determined by determining whether there is a failed server in a plurality of back-end service serversby checking online states of the service servers and by determining the number of service requests processed by each service server by checking the resource usage of the plurality of back-end service servers.

For example, the foregoing embodiment of the present application is described in detail by still taking the application scenario shown in FIG. 4 as an example. For a layer-4 user in a public cloud with SLB, in a layer-4 area, a VM may represent a corresponding user instance, and all instances are visible to all data centers. Therefore, cross traffic may occur when the LVS cluster forwards the service traffic.

By means of the foregoing solution, a target server can be determined by checking online states or resource usage of a plurality of back-end service servers, such that the plurality of back-end service servers can excellently accomplish tasks together, thus eliminating or avoiding existing bottlenecks of uneven distribution of network load and long response time due to data traffic congestion.

In the foregoing embodiment of the present application, when the load balancing device includes the layer-7 load balancing device, the scheduling strategy includes: determining the target server by checking online states or resource usage of a plurality of back-end service servers. The control server 161 is further configured that, when only the current standby data center is allowed to access a plurality of back-end service groups, at least one back-end service server that has a connection relationship and is allocated to each LVS in the LVS cluster differs, such that no cross traffic is generated when the plurality of back-end service servers forward the service traffic.

In an optional solution, to ensure that more service requests can be allocated to a server that processes a few service requests or a failed server can stop receiving a service request until a failure is fixed, an optimal target server can be determined by determining whether there is a failed server in a plurality of back-end service serversby checking online states of the service servers and by determining the number of service requests processed by each service server by checking the resource usage of the plurality of back-end service servers.

For example, the foregoing embodiment of the present application is described in detail by still taking the application scenario shown in FIG. 5 as an example. For a layer-7 user in a public cloud with SLB, in a layer-4 area, a proxy server represents a proxy component of the SLB, and all instances thereof are visible to all data centers. Therefore, cross traffic may occur when the LVS cluster forwards the service traffic, and a proxy component in a data center is only visible to SLB in the current data center. As such, it is avoided that traffic of the layer-7 user crosses into the L4 area to increase an unnecessary delay.

By means of the foregoing solution, a target server can be determined by checking online states or resource usage of a plurality of back-end service servers, such that the plurality of back-end service servers can excellently accomplish tasks together, thus eliminating or avoiding existing bottlenecks of uneven distribution of network load and long response time due to data traffic congestion.

In the foregoing embodiment of the present application, when the load balancing device includes the layer-7 load balancing device, the control server 161 further configures an RDS database corresponding to the current data center, such that no cross traffic is generated when the RDS database stores the service traffic in the case in which only the current standby data center is allowed to access the RDS database.

For example, the foregoing embodiment of the present application is described in detail by taking the application scenario shown in FIG. 5 as an example. For a user of an RDS, in a layer-4 area, a VM represents adatabaseof the RDS. The RDS is sensitive to a delay, and therefore an id of a data center in which the database of the RDS is located is designated during configuration, such that an SLB configuration system ensures that the id of the data center is only visible to an SLB in the current data center, thus avoiding cross traffic and reducing an unnecessary delay.

### Embodiment 4

This embodiment of the present application may provide a computer terminal. The computer terminal may be any computer terminal device in a computer terminal group. Optionally, in this embodiment, the computer terminal may also be replaced with a terminal device such as a mobile terminal.

Optionally, in this embodiment, the computer terminal may be located in at least one of a plurality of network devices in a computer network.

In this embodiment, the computer terminal may execute program codes of the following steps in a method for controlling service traffic between data centers: providing an active data center and a standby data center that have a mutually redundant relationship, at least one load balancing device being respectively deployed in the active data center and the standby data center, wherein in the case of switching from the active data center to the standby data center, service traffic transmitted to the active data center is guided to the standby data center, and the load balancing device in the standby data center allocates the service traffic.

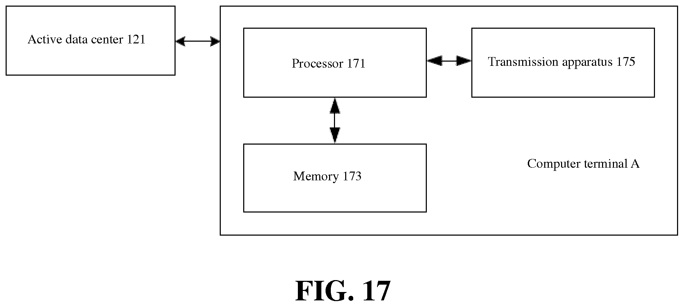

Optionally, FIG. 17 is a structural block diagram of a computer terminal according to Embodiment 4 of the present application. As shown in FIG. 17, the computer terminal A can include: one or more (only one is shown in the figure) processors 171, a memory 173, and a transmission apparatus 175.

The memory 173 may be configured to store a software program and a module, e.g., a program instruction/module corresponding to the method and apparatus for controlling service traffic between data centers in the embodiments of the present application. The processor 171 runs the software program and module stored in the memory to perform various functional applications and data processing, i.e., implement the method for controlling service traffic between data centers. The memory 173 may include a high-speed random access memory, and may further include a non-volatile memory, e.g., one or more magnetic storage apparatuses, flash memories, or other non-volatile solid-state memories. In some examples, the memory 173 may further include memories remotely disposed with respect to the processor, and the remote memories may be connected to the terminal A through a network. The example of the network includes, but not limited to, the Internet, an Intranet, a local area network, a mobile telecommunications network, and their combinations.

The processor 171 may call, by using the transmission apparatus, information and an application program stored in the memory to perform the following steps: providing an active data center and a standby data center that have a mutually redundant relationship, at least one load balancing device being respectively deployed in the active data center and the standby data center, wherein in the case of switching from the active data center to the standby data center, service traffic transmitted to the active data center is guided to the standby data center, and the load balancing device in the standby data center allocates the service traffic.

Optionally, the processor 171 may further execute a program code of the following step: monitoring the active data center by using an intermediate router, and if it is detected that the active data center is in an unavailable state, performing switching from the active data center to the standby data center.

Optionally, the processor 171 may further execute a program code of the following step: the unavailable state at least including any one of the following states: a power-off state, a failed state, an intrusion state, and an overflow state.

Optionally, the processor 171 may further execute a program code of the following step: setting a data center having a high priority in a data center cluster as the active data center, and setting a data center having a low priority as the standby data center, wherein before switching is performed from the active data center to the standby data center, the method further includes: synchronizingdata between the active data center and the standby data center in real time.

Optionally, the processor 171 may further execute a program code of the following step: the load balancing device including any one or more types as follows: a layer-3 load balancing device, a layer-4 load balancing device, a layer-5 load balancing device, a layer-6 load balancing device, and a layer-7 load balancing device.

Optionally, the processor 171 may further execute program codes of the following steps: when the load balancing device includes a layer-4 load balancing device, selecting, by a layer-4 load balancing device in the standby data center, a target server according to a scheduling strategy; and allocating, by the layer-4 load balancing device, service traffic to the target server through an LVS cluster.

Optionally, the processor 171 may further execute a program code of the following step: the scheduling strategy including: determining the target server by checking online states or resource usage of a plurality of back-end service servers, wherein a control server in the standby data center configures a scheduling strategy, and when any data center is allowed to access each back-end service group, cross traffic may be generated when the LVS cluster forwards the service traffic in the plurality of back-end service servers.

Optionally, the processor 171 may further execute program codes of the following steps: when the load balancing device includes a layer-7 load balancing device, selecting, by the layer-7 load balancing device in the standby data center, a target server according to a scheduling strategy; and allocating, by the layer-7 load balancing device, service traffic to the target server through an LVS cluster.

Optionally, the processor 171 may further execute a program code of the following step: the scheduling strategy including: determining the target server by checking online states or resource usage of a plurality of back-end service servers, wherein a control server in the standby data center configures a scheduling strategy, and when only the current standby data center is allowed to access a plurality of back-end service groups, at least one back-end service server that has a connection relationship and is allocated to each LVS in the LVS cluster differs, such that no cross traffic is generated when the plurality of back-end service servers forward the service traffic.

Optionally, the processor 171 may further execute a program code of the following step: configuring, by a control server in a standby data center, an RDS database corresponding to the current data center, such that no cross traffic is generated when the RDS database stores the service traffic in the case in which only the current standby data center is allowed to access the RDS database.

By means of the embodiment of the present invention, an active data center and a standby data center have a mutually redundant relationship, at least one load balancing device being respectively deployed in the active data center and the standby data center, wherein in the case of switching from the active data center to the standby data center, service traffic transmitted to the active data center can be guided to the standby data center in the solution, such that the load balancing device in the standby data center allocates the service traffic, thus implementing migration of the service traffic. The technical problem in the prior art that an Internet service in an IDC is interrupted when a data center fails and becomes unavailable is solved.

Those of ordinary skill may understand that the structure shown in FIG. 17 is merely schematic. The computer terminal may also be a terminal device such as a smart phone (for example, an Android phone, and an iOS phone), a tablet computer, a palmtop computer, a MobileInternetDevice (MID), and a PAD. FIG. 17 is not intended to limit the structure of the above electronic apparatus. For example, the computer terminal A may further include more or fewer components (such as a network interface and a display apparatus) than those shown in FIG. 17, or have a configuration different from that shown in FIG. 17.

Those of ordinary skill in the art may understand that all or a part of steps in various methods of the above embodiment can be implemented by a program instructing hardware related to a terminal device. The program may be stored in a computer readable storage medium, and the storage medium may include: a flash memory, a ROM, a RAM, a magnetic disk, or an optical disc.

### Embodiment 5

This embodiment of the present application further provides a storage medium. Optionally, in this embodiment, the storage medium may be configured to store program codes executed in the method for controlling service traffic between data centers provided in Embodiment 1.

Optionally, in this embodiment, the storage medium may be located in any computer terminal in a computer terminal group in a computer network, or located in any mobile terminal in a mobile terminal group.

Optionally, in this embodiment, the storage medium is configured to store program codes for performing the following steps: providing an active data center and a standby data center that have a mutually redundant relationship, at least one load balancing device being respectively deployed in the active data center and the standby data center, wherein in the case of switching from the active data center to the standby data center, service traffic transmitted to the active data center is guided to the standby data center, and the load balancing device in the standby data center allocates the service traffic.

Optionally, in this embodiment, the storage medium is configured to store a program code for performing the following step: monitoring the active data center by using an intermediate router, and if it is detected that the active data center is in an unavailable state, performing switching from the active data center to the standby data center.

Optionally, in this embodiment, the storage medium is configured to store a program code for performing the following step: the unavailable state at least including any one of the following states: a power-off state, a failed state, an intrusion state, and an overflow state.

Optionally, in this embodiment, the storage medium is configured to store a program code for performing the following step: setting a data center having a high priority in a data center cluster as the active data center, and setting a data center having a low priority as the standby data center, wherein before switching is performed from the active data center to the standby data center, the method further includes: synchronizing data between the active data center and the standby data center in real time.

Optionally, in this embodiment, the storage medium is configured to store a program code for performing the following step: the load balancing device including any one or more types as follows: a layer-3 load balancing device, a layer-4 load balancing device, a layer-5 load balancing device, a layer-6 load balancing device, and a layer-7 load balancing device.

Optionally, in this embodiment, the storage medium is configured to store program codes for performing the following steps: when the load balancing device includes a layer-4 load balancing device, selecting, by a layer-4 load balancing device in the standby data center, a target server according to a scheduling strategy; and allocating, by the layer-4 load balancing device, service traffic to the target server through an LVS cluster.

Optionally, in this embodiment, the storage medium is configured to store a program code for performing the following step: the scheduling strategy including: determining the target server by checking online states or resource usage of a plurality of back-end service servers, wherein a control server in the standby data center configures a scheduling strategy, and when any data center is allowed to access each back-end service group, cross traffic may be generated when the LVS cluster forwards the service traffic in the plurality of back-end service servers.

Optionally, in this embodiment, the storage medium is configured to store program codes for performing the following steps: when the load balancing device includes a layer-7 load balancing device, selecting, by the layer-7 load balancing device in the standby data center, a target server according to a scheduling strategy; and allocating, by the layer-7 load balancing device, service traffic to the target server through an LVS cluster.

Optionally, in this embodiment, the storage medium is configured to store a program code for performing the following step: the scheduling strategy including: determining the target server by checking online states or resource usage of a plurality of back-end service servers, wherein a control server in the standby data center configures a scheduling strategy, and when only the current standby data center is allowed to access a plurality of back-end service groups, at least one back-end service server that has a connection relationship and is allocated to each LVS in the LVS cluster differs, such that no cross traffic is generated when the plurality of back-end service servers forward the service traffic.

Optionally, in this embodiment, the storage medium is configured to store a program code for performing the following step: configuring, by a control server in a standby data center, an RDS database corresponding to the current data center, such that no cross traffic is generated when the RDS database stores the service traffic in the case in which only the current standby data center is allowed to access the RDS database.

The serial numbers of the embodiments of the present application are merely used for description, and do not imply the preference among the embodiments.

In the above embodiments of the present application, the descriptions of the embodiments have different emphases, and for parts that are not described in detail in an embodiment, reference may be made to related descriptions in other embodiments.

In the several embodiments provided in the present application, it should be understood that, the disclosed technical content may be implemented in other manners. For example, the apparatus embodiment described in the foregoing is merely schematic, for example, the division of units is merely division of logic functions, and in fact, there may be other division manners during actual implementation, for example, a plurality of units or components may be combined or may be integrated into another system, or some features may be ignored or not be performed. On the other hand, the shown or discussed coupling or direct coupling or communication connection between them may be implemented by using some interfaces, and indirect coupling or communication connection between units or modules may be in an electrical form or other forms.

Units described as separated parts may or may not be physically separated, parts shown as units may or may not be physical units, and they may be located at the same place, or be distributed to a plurality of network units. The objective of the solution of this embodiment may be implemented by selecting a part of or all units therein according to actual requirements.

In addition, various functional units in the embodiments of the present application may be integrated into one processing unit, each unit may also exist alone physically, and two or more units may also be integrated into one unit. The integrated unit may be implemented in the form of hardware, and may also be implemented in the form of a software functional unit.

The integrated unit, if implemented in the form of a software functional unit and sold or used as an independent product, may be stored in a computer readable storage medium. Based on such an understanding, the technical solutions of the present application essentially, or the part contributing to the prior art, or all or a part of the technical solution may be implemented in the form of a software product. The computer software product may be stored in a storage medium, and includes several instructions for instructing a computer device (which may be a personal computer, a server, a network device or the like) to perform all or a part of the steps in the methods described in the embodiments of the present application. The storage medium includes: a USB flash drive, a ROM, a RAM, a portable hard disk, a magnetic disk, an optical disc, or other media that may store program code.

Those described above are merely preferred implementation manners of the present application. It should be noted that those of ordinary skill in the art may further obtain several variations and improvements without departing from the principle of the present application, and the variations and improvements all fall within the protection scope of the present application.

## Claims

1. A method for controlling service traffic between data centers, comprising: providing an active data center and a standby data center that have a mutually redundant relationship, at least one load balancing device being respectively deployed in the active data center and the standby data center, wherein
in the case of switching from the active data center to the standby data center, service traffic transmitted to the active data center is guided to the standby data center, and the load balancing device in the standby data center allocates the service traffic.

2. The method according to claim 1, wherein the active data center is monitored by using an intermediate router, and if it is detected that the active data center is in an unavailable state, switching is performed from the active data center to the standby data center.

3. The method according to claim 2, wherein the unavailable state at least comprises any one of the following states: a power-off state, a failed state, an intrusion state, and an overflow state.

4. The method according to claim 1, wherein a data center having a high priority in a data center cluster is set as the active data center, and a data center having a low priority is set as the standby data center, wherein before switching is performed from the active data center to the standby data center, the method further includes: synchronizing data between the active data center and the standby data center in real time.

5. The method according to any of claims 1 to 4, wherein the load balancing device comprises any one or more types as follows: a layer-3 load balancing device, a layer-4 load balancing device, a layer-5 load balancing device, a layer-6 load balancing device, and a layer-7 load balancing device.

6. The method according to claim 5, wherein in the case that the load balancing device comprises the layer-4 load balancing device, the step of allocating, by the load balancing device in the standby data center, the service traffic comprises:
selecting, by the layer-4 load balancing device in the standby data center, a target server according to a scheduling strategy; and
allocating, by the layer-4 load balancing device, the service traffic to the target server through an LVS cluster.

7. The method according to claim 6, wherein the scheduling strategy comprises: determining the target server by checking online states or resource usage of a plurality of back-end service servers, wherein a control server in the standby data center configures a scheduling strategy, and when any data center is allowed to access each back-end service group, cross traffic may be generated when the LVS cluster forwards the service traffic in the plurality of back-end service servers.

8. The method according to claim 5, wherein in the case that the load balancing device comprises the layer-7 load balancing device, the step of allocating, by the load balancing device in the standby data center, the service traffic comprises:
selecting, by the layer-7 load balancing device in the standby data center, a target server according to a scheduling strategy; and
allocating, by the layer-7 load balancing device, the service traffic to the target server through an LVS cluster.

9. The method according to claim 8, wherein the scheduling strategy comprises: determining the target server by checking online states or resource usage of a plurality of back-end service servers, wherein a control server in the standby data center configures a scheduling strategy, and when only the current standby data center is allowed to access a plurality of back-end service groups, at least one back-end service server that has a connection relationship and is allocated to each LVS in the LVS cluster differs, such that no cross traffic is generated when the plurality of back-end service servers forward the service traffic.

10. The method according to claim 5, wherein a control server in the standby data center configures an RDS database corresponding to the current data center, such that no cross traffic is generated when the RDS database stores the service traffic in the case in which only the current standby data center is allowed to access the RDS database.

11. A system for controlling service traffic between data centers, comprising:
an active data center, at least one load balancing device configured to receive and forward service traffic being deployed in the active data center; and
a standby data center having a mutually redundant relationship with the active data center, at least one load balancing device being deployed in the standby data center, wherein,
in the case of switching from the active data center to the standby data center, the service traffic is guided to the standby data center, and the load balancing device in the standby data center allocates the service traffic.

12. The system according to claim 11, further comprising:
an intermediate router configured to monitor the active data center, and perform switching from the active data center to the standby data center if detecting that the active data center is in an unavailable state.

13. The system according to claim 12, wherein the unavailable state at least comprises any one of the following states: a power-off state, a failed state, an intrusion state, and an overflow state.

14. The system according to any of claims 11 to 13, wherein the load balancing device comprises any one or more types as follows: a layer-3 load balancing device, a layer-4 load balancing device, a layer-5 load balancing device, a layer-6 load balancing device, and a layer-7 load balancing device.

15. The system according to claim 14, wherein the load balancing device comprises:
the layer-4 load balancing device configured to select a target server according to a scheduling strategy, and allocate the service traffic to the target server through an LVS cluster.

16. The system according to claim 14, wherein the load balancing device comprises:
the layer-7 load balancing device configured to select a target server according to a scheduling strategy, and allocate the service traffic to the target server through an LVS cluster.

17. The system according to claim 14, wherein the standby data center further comprises: a control server connected respectively to the layer-4 load balancing device and the layer-7 load balancing device, and configuring a scheduling strategy.

18. An apparatus for controlling service traffic between data centers, comprising:
a control module configured to, in the case of switching from an active data center to a standby data center, guide service traffic transmitted to the active data center to the standby data center, such that aload balancing device in the standby data center allocates the service traffic, wherein the active data center and the standby data center have a mutually redundant relationship, and at least one load balancing device is respectively deployed in the active data center and the standby data center.

19. The apparatus according to claim 18, further comprising a switching module configured to monitor the active data center, and if it is detected that the active data center is in an unavailable state, perform switching from the active data center to the standby data center.

20. The apparatus according to claim 19, wherein the unavailable state at least comprises any one of the following states: a power-off state, a failed state, an intrusion state, and an overflow state.

21. The apparatus according to claim 18, further comprising:
a setting module configured to set a data center having a high priority in a data center cluster as the active data center, and set a data center having a low priority as the standby data center; and
a synchronization module configured to synchronize data between the active data center and the standby data center in real time.

22. The apparatus according to any of claims 19 to 21, wherein the load balancing device comprises any one or more types as follows: a layer-3 load balancing device, a layer-4 load balancing device, a layer-5 load balancing device, a layer-6 load balancing device, and a layer-7 load balancing device.
